# EUROPEAN PATENT SPECIFICATION

(11) **EP 4 045 586 B1**
(45) Date of publication and mention of the grant of the patent: **29.04.2026**
(21) Application number: 20815812.1
(22) Date of filing: 01.12.2020
(51) Int. Cl.: C08F 2/01, C08F 10/02, C08F 2/02

(54) **COOLING OF REACTION MIXTURE OBTAINED BY HIGH-PRESSURE POLYMERIZATION PROCESS OF ETHYLENICALLY UNSATURATED MONOMERS**
KÜHLUNG EINER REAKTIONSMISCHUNG, DIE DURCH EIN HOCHDRUCKPOLYMERISIERUNGSVERFAHREN VON ETHYLENISCH UNGESÄTTIGTEN MONOMEREN ERHALTEN WURDE
REFROIDISSEMENT D'UN MÉLANGE DE RÉACTION OBTENU PAR PROCÉDÉ DE POLYMÉRISATION À HAUTE PRESSION DE MONOMÈRES ÉTHYLÉNIQUEMENT INSATURÉS

(30) Priority: 03.12.2019 EP 19213346
(43) Date of publication of application: 24.08.2022
(73) Proprietor: Basell Polyolefine GmbH, 50389 Wesseling (DE)
(72) Inventor: FINETTE, Andre-Armand, 50997 Köln (DE); MOHRBUTTER, Juergen, 53347 Alfter (DE); WOLF, Christoph, 50259 Pulheim-Dansweiler (DE); DEUERLING, Michael, 53919 Weilerswist (DE); KHAYRULLIN, Danir, 50321 Bruehl (DE); LITTMANN, Dieter, 35325 Mücke (DE)
(74) Representative: LyondellBasell
(86) International application number: PCT/EP2020/084052
(87) International publication number: WO 2021/110645

(56) References cited:
- WO-A1-2015/197561
- US-A1- 2013 274 424
- US-A1- 2018 030 160

## Description

### FIELD OF THE INVENTION

The present disclosure provides a process for preparing ethylene polymers comprising polymerizing ethylene or copolymerizing ethylene and one or more comonomers at a temperature from 180°C to 350°C and a pressure of from 110 MPa to 350 MPa in a continuously operated tubular polymerization reactor. The present disclosure provides in particular a process for preparing ethylene polymers comprising polymerizing ethylene or copolymerizing ethylene and one or more comonomers at a temperature from 180°C to 350°C and a pressure of from 110 MPa to 350 MPa in a continuously operated tubular polymerization reactor equipped with one or more cooling jackets, wherein a reaction mixture leaving the reactor passes a post reactor cooler equipped with one or more cooling jackets.

### BACKGROUND OF THE INVENTION

Ethylene polymers may be formed in high-pressure polymerization processes. Individual steps in such processes are the compression of the reaction mixture to the reactor pressure, introduction of an initiator in at least one stage, polymerization while removing exothermic heat of reaction, product separation and further processing. For said processes, different types of reactor design may be used. One class of reactors to form low density ethylene-based polymers are tubular reactors.

A common set-up of a plant for preparing low density polyethylene comprises, besides the polymerization reactor, further equipment. The reaction components are usually pressurized by a combination of two compressors, a primary compressor and a secondary compressor. At the end of the polymerization sequence, a high-pressure polymerization unit normally further includes apparatuses like extruders and granulators for pelletizing the obtained polymer. Furthermore, such a polymerization unit generally also comprises means for feeding monomers and comonomers, free-radical initiators, chain transfer agents or other substances at one or more positions to the polymerization reaction. A process and an apparatus for the manufacture of ethylene polymers and copolymers under high pressures are for example disclosed in WO 2007/018871 A1.

A characteristic of the radically initiated polymerization of ethylenically unsaturated monomers under high pressure is that the conversion of the monomers is incomplete, usually only about 10% to 50% of the dosed monomers are converted. The resulting reaction mixture commonly leaves the reactor through a pressure control valve, often designated as a let-down valve, and is then usually separated into polymeric and gaseous components with the unreacted monomers being recycled. To avoid unnecessary decompression and compression steps in this recycling, the separation into polymeric and gaseous components may be carried out in two stages. The monomer-polymer mixture leaving the reactor is transferred to a first separating vessel, frequently called a high-pressure product separator, in which the separation into polymeric and gaseous components is carried out at a pressure that allows recycling of the ethylene and comonomers separated from the monomer-polymer mixture to the reaction mixture at a position between the primary compressor and the secondary compressor. At the first separation vessel operating conditions, the polymeric components within the separating vessel are in liquid state. The liquid phase obtained in the first separating vessel is transferred to a second separation vessel, frequently called a low-pressure product separator, in which further separation into polymeric and gaseous components takes place at lower pressure. The ethylene and comonomers separated from the mixture in the second separation vessel are fed to the primary compressor where they are compressed to the pressure of the fresh ethylene feed, combined with the fresh ethylene feed and the joined streams are further pressurized to the pressure of the high-pressure gas recycle stream.

The properties and the structure of the produced ethylene polymers, such as molecular weight, molecular weight distribution and the amount of short- and long-chain branching, depend strongly on the reaction parameters. Furthermore, the feasible ethylene conversion in a reaction zone depends on the amount of polymerization heat, which can be removed from the reaction mixture in the respective reaction zone. That means, at a given start temperature, the ethylene conversion is the higher the higher the peak polymerization temperature is. Consequently, it is common to operate high-pressure polymerizations of ethylenically unsaturated monomers at fairly high temperatures. For removing the generated heat of polymerization, the tubular reactor is equipped with cooling jackets. A frequent coolant for these cooling jackets is hot water, which is commonly further used to generate steam.

WO 01/85807 A1 discloses a method for the continuous production of ethylene homoand copolymers in a tubular reactor having a hot water jacket and one or several reaction zones. The hot water jacket of each of the reaction zones is divided into two independently controllable, separate, longitudinal sections which are operated with different water exit temperatures, where the temperature of the water exiting the first section per reaction zone is set to 180°C to 210°C and the temperature of the water exiting the following second section per reaction zone is set to 140°C to 180°C.

The reaction mixture leaving the tubular reactor through the pressure control valve is a mixture of polymeric and gaseous components. Due to the reduced pressure downstream of the pressure control valve, the reaction mixture separates in a polymer-rich liquid phase and a monomer-rich gas phase. After separating off as much non-reacted monomer as possible, the remaining liquid phase is fed to an extruder for pelletizing. However, a too high temperature in the separation and pelletizing steps may result in an ineffective separation with a higher rate of carry over and a poor pellet cut. Moreover, there is a general interest in generating as much steam as possible from the released heat of polymerization.

Accordingly, for further cooling, the reaction mixture which has left the reactor is frequently passed through a post reactor cooler which is located downstream of the pressure control valve and upstream of the first separating vessel. As for example disclosed by WO 2019/134886 A1, such a post reactor cooler is often a conduit equipped with cooling jackets which has a design which is similar to the design of a high-pressure tubular reactor. It is common practice that the cooling jackets of the post reactor cooler are cooled with the same coolant as the cooling jackets of the tubular reactor.

However, the polymeric material produced in the tubular reactor may vary in polymer composition, molecular weight or other features. Accordingly, temperature conditions which are favorable for some aspects of the polymerization and the reaction mixture work-up may be unfavorable for other aspects. Furthermore, there is a general desire to generate as much steam as possible from the released heat of polymerization.

Hence, there is a need to overcome the disadvantages of the prior art and to provide a process for preparing ethylene polymers which allows to control the separation of polymeric and gaseous components of the reaction mixture and to control the pelletizing process and which nonetheless results in a high conversion of ethylene and a high amount of generated steam.

### SUMMARY OF THE INVENTION

The present disclosure provides a process for preparing ethylene polymers comprising polymerizing ethylene or copolymerizing ethylene and one or more comonomers at a temperature from 180°C to 350°C and a pressure of from 110 MPa to 350 MPa in a continuously operated tubular polymerization reactor being equipped with one or more cooling jackets for removing the heat of the reaction, wherein a reaction mixture leaves the reactor through a pressure control valve and then passes a post reactor cooler equipped with one or more cooling jackets, and
wherein the cooling jackets are provided with at least two coolants having an inlet temperature and the inlet temperature of a coolant fed to one or more of the cooling jackets cooling the post reactor cooler is independently controlled from the inlet temperature of the coolant or the coolants fed to the one or more cooling jackets cooling the polymerization reactor.

In some embodiments, the post reactor cooler is equipped with at least one upstream cooling jacket and at least one downstream cooling jacket and the cooling jackets cooling the post reactor cooler are provided with at least two coolants having independently controlled inlet temperatures.

In some embodiments, the coolant, of which the inlet temperature is independently controlled from the inlet temperature of the coolant or the coolants fed to the one or more cooling jackets cooling the polymerization reactor, is the coolant fed to the at least one downstream cooling jacket.

In some embodiments, the tubular polymerization reactor has one, two or more reaction zones and each of the reaction zones comprises at least an upstream segment, in which a polymerization of ethylene or a copolymerization of ethylene and the one or more comonomers occurs, and a downstream segment, in which the reaction mixture is cooled, and each of the segments of the reaction zones is equipped with one or more cooling jackets, wherein the inlet temperature of a coolant fed to one or more of the cooling jackets cooling a downstream segment of the reaction zones is independently controlled from the inlet temperature of coolant fed to one or more of the cooling jackets cooling an upstream segment of the reaction zones.

In some embodiments, the coolant inlet temperatures of the coolants cooling the cooling jackets of the tubular polymerization reactor and of the post reactor cooler are in the range from 50°C to 220°C.

In some embodiments, the coolant inlet temperature of the coolant, of which the inlet temperature is independently controlled from the inlet temperature of the coolant or the coolants fed to the one or more cooling jackets cooling the polymerization reactor is in the range from 80°C to 220°C.

In some embodiments, the inlet temperature of at least one coolant fed to the one or more cooling jackets cooling the polymerization reactor is controlled in a manner to achieve a maximum ethylene conversion.

In some embodiments, the inlet temperature of the coolant, of which the inlet temperature is independently controlled from the inlet temperature of the coolant or the coolants fed to the one or more cooling jackets cooling the polymerization reactor, is controlled by providing the temperature of the melt fed to the extruder or granulator device as set point.

In some embodiments, the coolants for cooling the cooling jackets of the polymerization reactor and cooling the cooling jackets of the post reactor cooler are operated in closed loops.

In some embodiments, the coolants for cooling the cooling jackets of the tubular polymerization reactor and for cooling the cooling jackets of the post reactor cooler are circulated in a cooling system which comprises a volume buffer system to accommodate volume expansion of the coolant, a coolant circulation pump and a cooling arrangement for removing the absorbed heat of polymerization from the cooling system.

In some embodiments, the coolants for cooling the cooling jackets of the polymerization reactor and cooling the cooling jackets of the post reactor cooler are pressurized waters.

In some embodiments, the pressurized waters for cooling the cooling jackets of the tubular polymerization reactor are circulated in cooling systems comprising a buffer vessel and a water circulation pump, and the inlet temperatures of the pressurized waters cooling the cooling jackets of the tubular polymerization reactor are controlled by varying the pressures in the buffer vessels of the cooling systems.

In some embodiments, the pressurized water, of which the inlet temperature is independently controlled from the inlet temperature of the pressurized water or the pressurized waters fed to the one or more cooling jackets cooling the polymerization reactor, is circulated in a secondary cooling system which is cooled by a primary cooling system.

In some embodiments, the temperature of the melt fed to the extruder or granulator device is from 220°C to 270°C.

In some embodiments, the ethylene polymers are low density polyethylenes having a melt flow rate MFR determined according to DIN EN ISO 1133:2005, condition D at a temperature of 190°C under a load of 2.16 kg of from 0.05 g/10 min to 500 g/10 min.

### BRIEF DESCRIPTION OF THE DRAWINGS

Figure 1 shows schematically a set-up for preparing ethylene polymers in a continuously operated tubular polymerization reactor.
Figure 2 shows schematically a set-up for the cooling jackets of a post reactor cooler.
Figure 3 shows a representative collection of pellets having a good cut.
Figure 4 shows a representative collection of pellets having a poor cut performance

### DETAILED DESCRIPTION OF THE INVENTION

The present disclosure refers to a process for preparing ethylene polymers comprising polymerizing ethylene or copolymerizing ethylene and one or more comonomers at a temperature from 100°C to 350°C and a pressure of from 110 MPa to 350 MPa in a continuously operated tubular reactor. The present disclosure especially refers to such a process in which the reaction mixture leaves the reactor through a pressure control valve and then passes a post reactor cooler equipped with one or more cooling jackets.

The process for preparing ethylene polymers is preferably a homopolymerization of ethylene or a copolymerization of ethylene with one or more other monomers, provided that these monomers are free-radically copolymerizable with ethylene under high pressure. Examples of suitable copolymerizable monomers are α,β-unsaturated C₃-C₈-carboxylic acids, in particular maleic acid, fumaric acid, itaconic acid, acrylic acid, methacrylic acid and crotonic acid, derivatives of α,β-unsaturated C₃-C₈-carboxylic acids, e.g. unsaturated C₃-C₁₅-carboxylic esters, in particular esters of C₁-C₆-alkanols, or anhydrides, in particular methyl methacrylate, ethyl methacrylate, n-butyl methacrylate or tert-butyl methacrylate, methyl acrylate, ethyl acrylate, n-butyl acrylate, 2-ethylhexyl acrylate, tert-butyl acrylate, methacrylic anhydride, maleic anhydride or itaconic anhydride, and 1-olefins such as propene, 1-butene, 1-pentene, 1-hexene, 1-octene or 1-decene. In addition, vinyl carboxylates, particularly preferably vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer.

In the case of copolymerization, the proportion of comonomer or comonomers in the reaction mixture is from 1 to 50% by weight, preferably from 3 to 40% by weight, based on the amount of monomers, i.e. the sum of ethylene and other monomers. Depending on the type of comonomer, it can be preferred to feed the comonomers at more than one point to the reactor set-up. Preferably the comonomers are fed to the suction side of the secondary compressor.

For the purposes of the present disclosure, polymers or polymeric materials are all substances which are made up of at least two monomer units. The polymers or polymeric materials are preferably low density polyethylenes having an average molecular weight Mₙ of more than 20 000 g/mole. The term low density polyethylene is meant to include ethylene homopolymers and ethylene copolymers. The process of the present disclosure can also be advantageously used in the preparation of oligomers, waxes and polymers having a molecular weight Mₙ of less than 20 000 g/mole.

The process of the present disclosure is preferably a radical polymerization carried out in the presence of free-radical polymerization initiators. Possible initiators for starting the polymerization in the respective reaction zones may include any substance that can produce radical species under the conditions in the polymerization reactor, for example, oxygen, air, azo compounds or peroxidic polymerization initiators. In a preferred embodiment of the disclosure the polymerizations is carried out by using oxygen, either fed in the form of pure O₂ or as air. In case of initiating the polymerization with oxygen, the initiator is normally first mixed with the ethylene feed and then fed to the reactor. In such a case it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. Examples of suitable organic peroxides are peroxy esters, peroxy ketals, peroxy ketones and peroxycarbonates, e.g. di(2-ethylhexyl) peroxydicarbonate, dicyclohexyl peroxydicarbonate, diacetyl peroxydicarbonate, tert-butyl peroxyisopropylcarbonate, di-sec-butyl peroxydicarbonate, di-tert-butyl peroxide, di-tert-amyl peroxide, dicumyl peroxide, 2,5-dimethyl-2,5-di-tert-butylperoxy-hexane, tert-butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethylhexanoylperoxy)hexane, tert-amyl peroxy-2-ethylhexanoate, dibenzoyl peroxide, tert-butyl peroxy-2-ethylhexanoate, tert-butyl peroxydiethylacetate, tert-butyl peroxydiethylisobutyrate, tert-butyl peroxy-3,5,5-trimethylhexanoate, 1,1-di(tert-butylperoxy)-3,3,5-trimethylcyclohexane, 1,1-di(tert-butylperoxy)cyclohexane, tert-butyl peroxyacetate, cumyl peroxyneodecanoate, tert-amyl peroxyneodecanoate, tert-amyl peroxypivalate, tert-butyl peroxyneodecanoate, tert-butyl permale-ate, tert-butyl peroxypivalate, tert-butyl peroxyisononanoate, diisopropylbenzene hydroperoxide, cumene hydroperoxide, tert-butyl peroxybenzoate, methyl isobutyl ketone hydroperoxide, 3,6,9-triethyl-3,6,9-trimethyl-triperoxocyclononane and 2,2-di(tert-butylperoxy)butane. Azoalkanes (di-azenes), azodicarboxylic esters, azodicarboxylic dinitriles such as azobisisobutyronitrile and hydrocarbons which decompose into free radicals and are also referred as C-C initiators, e.g. 1,2-diphenyl-1,2-dimethylethane derivatives and 1,1,2,2-tetramethylethane derivatives, are also suitable. It is possible to use either individual initiators or preferably mixtures of various initiators. A large range of initiators, in particular peroxides, are commercially available, for example the products of Akzo Nobel offered under the trade names Trigonox^{®} or Perkadox^{®}.

Suitable peroxidic polymerization initiators include, for example, 1,1-di(tert-butyl-peroxy)cyclohexane, 2,2-di(tert-butylperoxy)butane, tert-butyl peroxy-3,5,5-trimethylhexanoate, tert-butyl peroxybenzoate, 2,5-dimethyl-2,5-di(tert-butylperoxy)hexane, tert-butyl cumyl peroxide, di-tert-butyl peroxide and 2,5-dimethyl-2,5-di(tert-butylperoxy)hex-3-yne, and particular preference is given to using tert-butyl peroxy-3,5,5-trimethylhexanoate, di-(2-ethylhexyl)peroxydicarbonate or tert-butyl peroxy-2-ethylhexanoate.

The initiators can be employed individually or as a mixture in concentrations of from 0.1 mol/t to 50 mol/t of polyethylene produced, in particular from 0.2 mol/t to 20 mol/t, in each reaction zone. In a preferred embodiment of the present disclosure the free-radical polymerization initiator, which is fed to a reaction zone, is a mixture of at least two different azo compounds or organic peroxides. If such initiator mixtures are used it is preferred that these are fed to all reaction zones. There is no limit for the number of different initiators in such a mixture, however preferably the mixtures are composed of from two to six and in particular of two, three or four different initiators. Particular preference is given to using mixtures of initiators which have different decomposition temperatures.

It is often advantageous to use the initiators in the dissolved state. Examples of suitable solvents are ketones and aliphatic hydrocarbons, in particular octane, decane and isododecane and also other saturated C₈-C₂₅-hydrocarbons. The solutions comprise the initiators or initiator mixtures in proportions of from 2 to 65% by weight, preferably from 5 to 40% by weight and particularly preferably from 8 to 30% by weight.

In a preferred embodiment of the present disclosure, the polymerization is carried out in the presence of a chain transfer agent. Chain transfer agents are chemical compounds which may interact with a growing polymer chain, terminate the further growth of the growing polymer chain and induce the growth of another growing chain. Accordingly, the molecular weight of the polymers to be prepared can be altered by addition of chain transfer agents which are sometimes also called modifiers or regulators. Examples of suitable chain transfer agents are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol or mixtures of these compounds. Particular preference is given to using saturated aliphatic aldehydes, in particular propionaldehyde or olefinic hydrocarbons such as propene, 1-butene or 1-hexene, or aliphatic hydrocarbons such as propane, or mixtures of these compounds. Preferably, the amount of chain transfer agent fed to the tubular reactor is from 0.2 kg/t prepared polymer to 40 kg/t prepared polymer, more preferably 0.4 kg/t prepared polymer to 20 kg/t prepared polymer. In a preferred embodiment a chain transfer agent comprising at least one aldehyde or at least one ketone is employed and the amount of added aldehydes and ketones is from 0.4 kg/t of prepared polymer to 10 kg/t of prepared polymer.

In a preferred embodiment of the present disclosure, propionic aldehyde is used as sole chain transfer agent or the chain transfer agent is a mixture of propionic aldehyde and one or more olefinic hydrocarbons.

The high-pressure polymerization is carried out at pressures in the range from 180 MPa to 350 MPa, with pressures of from 200 MPa to 320 MPa being preferred. The polymerization temperatures are in the range from 100°C to 350°C, preferably from 120°C to 340°C and more preferably from 150°C to 330°C.

The compression of the reaction gas composition to the polymerization pressure is carried out by a combination of a primary compressor and a secondary compressor in which the primary compressor preferably first compresses the reaction gas composition to a pressure of from 10 MPa to 50 MPa and the secondary compressor then further compresses the reaction gas composition to the polymerization pressure of from 180 MPa to 350 MPa. Preferably the primary compressor and the secondary compressor are multistage compressors. It is further possible to separate one or more stages of one or both of these compressors and divide the stages into separated compressors. However, usually a series of one primary compressor and one secondary compressor is used for compressing the reaction gas composition to the polymerization pressure. In such cases, sometimes the whole primary compressor is designated as primary compressor. However, it is also common to designate the one or more first stages of the primary compressor, which compress the recycle gas from the low-pressure product separator to the pressure of the fresh ethylene feed, as booster compressor and then only the one or more subsequent stages as primary compressor although the booster compressor and the subsequent stages are all part of one apparatus. A sometimes used name for the secondary compressor is hyper compressor. The capacity of the secondary compressor, that means the feed rate of compressed reaction gas composition from the compressor combination to the tubular reactor, is preferably from 80 t/h to 210 t/h, more preferably from 100 t/h to 180 t/h and especially preferred from 120 t/h to 160 t/h.

In a preferred embodiment of the present disclosure the entire reaction gas composition provided by the secondary compressor is fed to the inlet of the tubular reactor. In another preferred embodiment of the present disclosure only a part of the reaction gas composition compressed by the secondary compressor is fed to the inlet of the tubular reactor and the remainder of the reaction gas composition compressed by the secondary compressor is fed as one or more side streams to the tubular reactor downstream of the inlet of the tubular reactor. In such a set-up preferably from 30 to 90% by weight, more preferably from 40 to 70% by weight of the reaction gas composition provided by the secondary compressor are fed to the inlet of the tubular reactor and from 10 to 70% by weight, more preferably from 30 to 60% by weight of the reaction gas composition provided by the secondary compressor are fed as one or more side streams to the tubular reactor downstream of the inlet of the tubular reactor.

In the process of the present disclosure, the reaction mixture leaves the reactor through a pressure control valve for controlling the pressure within the polymerization reactor. The pressure control valve is preferably arranged downstream of the outlet of the polymerization reactor. The pressure control valve can be any valve arrangement which is suitable for reducing the pressure of the reaction mixture leaving the reactor to the pressure within the first separation vessel. Downstream of the pressure control valve the reaction mixture passes a post reactor cooler equipped with one or more cooling jackets.

In preferred embodiments of the present disclosure, the tubular reactor is part of a polymerization system comprising, besides the polymerization reactor, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high-pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called low-pressure product separator, and further separated, at reduced pressure, usually at an absolute pressure in the range of from 0.1 to 0.5 MPa, in polymeric and gaseous components. The gaseous fraction withdrawn from the second separation vessel is fed via a so-called low-pressure gas recycle line to the primary compressor, preferably to the foremost of the stages. Also the low-pressure gas recycle line usually comprises several purification steps for purifying the gas from undesired components. The production line can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

The polymeric components obtained by the polymerization are finally transformed into pellets, normally by apparatuses like extruders or granulators.

The process of the present disclosure is carried out in a continuously operated tubular polymerization reactor which is equipped with one or more cooling jackets for removing the heat of the reaction. Appropriate tubular reactors are basically long, thick-walled pipes, which are usually from about 0.5 km to 5 km, preferably from 1 km to 4 km and more preferably from 1.5 km to 3 km long. The inner diameter dᵢ of the tubular reactor is preferably in the range from 50 mm to 120 mm and more preferably from 60 mm to 100 mm. In case the tubular reactor is designed to be operated with one or more reaction gas side streams, the most downstream part of the tubular reactor, which is passed by the total reaction mixture, has preferably an inner diameter dᵢ in the range from 50 mm to 120 mm and more preferably from 60 mm to 100 mm. Suitable tubular reactors have preferably a length-to-diameter ratio of greater than 1000, preferably from 10000 to 50000 and especially from 20000 to 35000. Preferably the tubular reactor is composed of tubes of a length from 5 m to 25 m, more preferably of a length from 10 m to 22 m, and especially of a length of from 15 m to 20 m. The individual tubes of the tubular reactor are preferably flanged together. The tube can also be flanged to a bend, preferably to a 180° bend.

Preferred tubular reactors have at least two reaction zones, preferably from 2 to 6 reaction zones and more preferably from 2 to 5 reaction zones. The number of reaction zones is given by the number of feeding points for the initiators or initiator mixtures. Such a feeding point can, for example, be an injection point for a solution of azo compounds or organic peroxides. Initiator is added to the reactor, where the initiator decomposes into free radicals and initiates polymerization. The generated heat of the reaction rises the temperature of the reaction mixture, since more heat is generated than can be removed through the walls of the tubular reactor. The rising temperature increases the rate of decomposition of the free-radical initiators and accelerates polymerization until essentially all free-radical initiator is consumed. Thereafter no further heat is generated and the temperature decreases again since the temperature of the reactor walls is lower than that of the reaction mixture. Accordingly, the part of the tubular reactor downstream of an initiator feeding point in which the temperature rises is the reaction zone, while the part thereafter, in which the temperature decreases again, is predominantly a cooling zone. The amount and nature of added free-radical initiators determines how much the temperature rises and accordingly allows adjusting that value. Normally, the temperature rise is set to be in the range from 70°C to 170°C in the first reaction zone and 30°C to 130°C for the subsequent reaction zones depending on the product specifications and the reactor configuration.

The post reactor cooler is preferably composed of tubes of a length from 5 m to 25 m, more preferably of a length from 10 m to 22 m, and especially of a length of from 15 m to 20 m. The individual tubes of the tubular reactor are preferably flanged together. The tubes can also be flanged to a bend, preferably to a 180° bend.

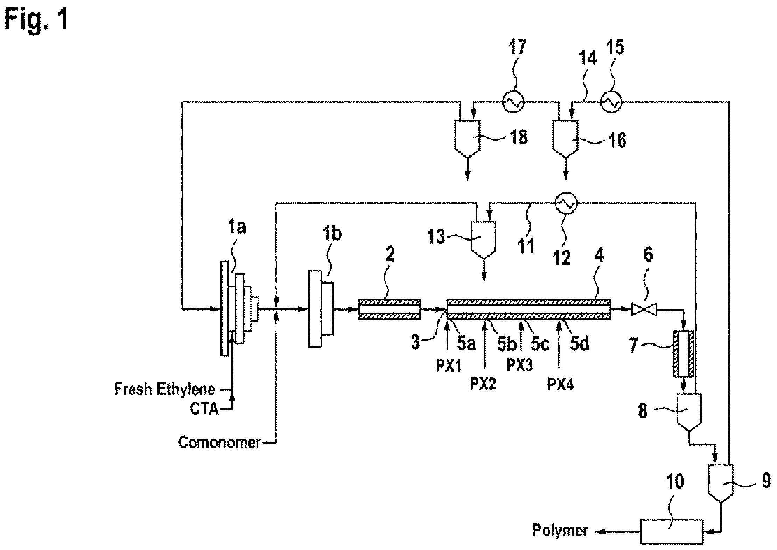

Figure 1 shows schematically a set-up for preparing ethylene polymers in a continuously operated tubular polymerization reactor.

The fresh ethylene, which may be under a pressure of 1.7 MPa, is firstly compressed to a pressure of about 28 MPa by means of a primary compressor (1a) and then compressed to the reaction pressure of about 280 MPa using a secondary compressor (1b). The chain transfer agent (CTA) is added to primary compressor (1a). The reaction mixture leaving the primary compressor (1b) is fed to pre-heater (2), where the reaction mixture is preheated to the reaction start temperature of from about 120°C to 220°C, and then conveyed to the inlet (3) of the tubular reactor (4).

The tubular reactor (4) is basically a long, thick-walled pipe with cooling jackets to remove the liberated heat of reaction from the reaction mixture by means of a coolant circuit (not shown).

The tubular reactor (4) depicted in Figure 1 has four spatially separated initiator injection points (5a), (5b), (5c) and (5d) for feeding initiators or initiator mixtures PX1, PX2, PX3 and PX4 to the reactor and accordingly also four reaction zones. By feeding suitable free-radical initiators, which decompose at the temperature of the reaction mixture, to the tubular reactor the polymerization reaction starts.

The reaction mixture leaves the tubular reactor (4) through a pressure control valve (6) and passes a post reactor cooler (7) with cooling jackets to further cool the reaction mixture. Thereafter, the resulting polymer is separated off from unreacted ethylene and other low molecular weight compounds (monomers, oligomers, polymers, additives, solvent, etc.) by means of a first separation vessel (8) and a second separation vessel (9), discharged and pelletized via an extruder and granulator (10).

The ethylene and comonomers which have been separated off in the first separation vessel (8) are fed back to the low-pressure side of the tubular reactor (4) in the high-pressure circuit (11) at 30 MPa. In the high-pressure circuit (11), the gaseous material separated from the reaction mixture is first freed from other constituents in at least one purification stage and then added to the monomer stream between primary compressor (1a) and secondary compressor (1b). Figure 1 shows one purification stage consisting of a heat exchanger (12) and a separator (13). It is however also possible to use a plurality of purification stages. The high-pressure circuit (11) usually separates solvent and waxes.

The ethylene which has been separated off in the second separation vessel (9), which further comprises, inter alia, the major part of the very low molecular weight products of the polymerization (oligomers) and solvent, is worked up in the low-pressure circuit (14) at an absolute pressure of from about 0.1 to 0.5 MPa in a plurality of separators with a heat exchanger being located between each of the separators. Figure 1 shows two purification stages consisting of heat exchangers (15) and (17) and separators (16) and (18). It is however also possible to use only one purification stages or preferably more than two purification stages. The low-pressure circuit (14) usually separates oils, solvent and waxes.

The tubular polymerization reactors of the present disclosure are equipped with one or more cooling jackets for removing the heat of the reaction. Preferably, all reaction zones of the tubular reactor are equipped with cooling jackets. It is possible that each of the reaction zones of the tubular reactors is equipped with just one cooling jacket which covers all or a part of the reaction zone. Preferably, the tubular reactor is composed of tubes and each of the tubes is equipped with a cooling jacket.

For cooling the reaction mixture leaving the polymerization reactor, the reaction mixture passes a post reactor cooler equipped with one or more cooling jackets. Preferably, the post reactor cooler is composed of tubes and each of the tubes is equipped with a cooling jacket.

In an embodiment of the present disclosure, each of the cooling jackets cooling the post reactor cooler are provided with fresh coolant having a controlled inlet temperature. It is also possible to provide only some of the cooling jackets with fresh coolant having a controlled inlet temperature and to provide the other cooling jackets cooling the post reactor cooler with coolant that had previously cooled another cooling jackets of the cooling jackets cooling the post reactor cooler. Preferably, the cooling jackets, which are not provided with fresh coolant having a controlled inlet temperature, are provided with coolant coming from a cooling jacket located in the proximity of the respective cooling jacket. In especially preferred embodiments of the present disclosure, the cooling jackets, which are not provided with fresh coolant having a controlled inlet temperature, are provided with coolant coming from the cooling jacket located directly downstream of the respective cooling jacket.

The coolant used to cool the cooling jackets of the tubular polymerization reactor and the post reactor cooler can be any suitable fluid. Preferably, the coolant is pressurized water.

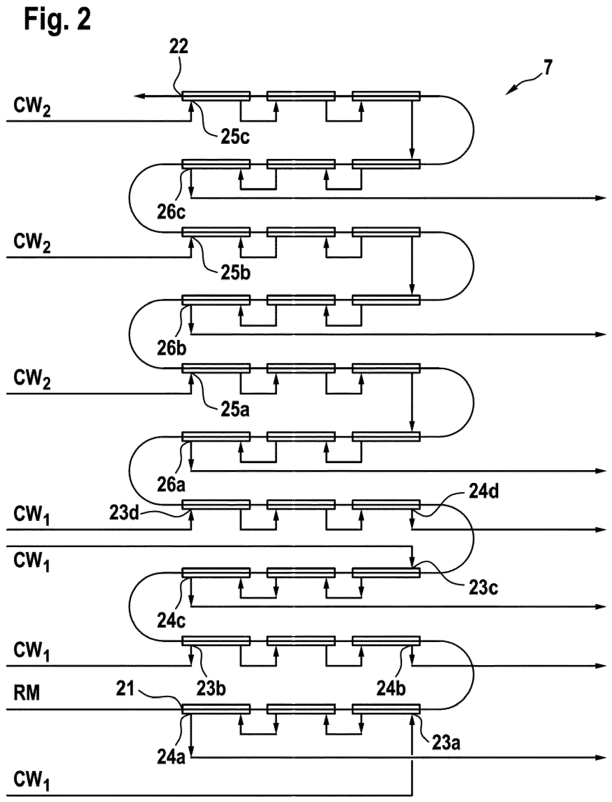

Figure 2 shows schematically a set-up for the cooling jackets of a post reactor cooler (7) according to the present disclosure.

The reaction mixture (RM) coming from the pressure control valve (6) enters the post reactor cooler (7) at cooler inlet (21) and leaves the post reactor cooler (7) at cooler outlet (22).

In the set-up shown in Figure 2, the coolant is hot, pressurized water.

Cooling water (CW₁) having a temperature T_{CC1} is fed to four triplets of cooling jackets at water inlets (23a), (23b), (23c) and (23d) and withdrawn from the four triplets of cooling jackets at water outlets (24a), (24b), (24c) and (24d). Cooling water (CW₂) having a temperature T_{CC2} is fed to three groups of six cooling jackets at water inlets (25a), (25b) and (25c) and withdrawn from the three groups of six of cooling jackets at water outlets (26a), (26b) and (26c).

For achieving a good pelletizing behavior of the LDPE in the pelletizing, the temperature of the melt fed to the extruder or granulator device is preferably from 220°C to 270°C, more from 230°C to 260°C and in particular from 240°C to 250°C. The obtained ethylene polymer are preferably low density polyethylenes having a melt flow rate MFR determined according to DIN EN ISO 1133:2005, condition D at a temperature of 190°C under a load of 2.16 kg of from 0.05 g/10 min to 500 g/10 min, preferably from 0.1 g/10 min to 300 g/10 min, and more preferably from 0.15 g/10 min to 100 g/10 min.

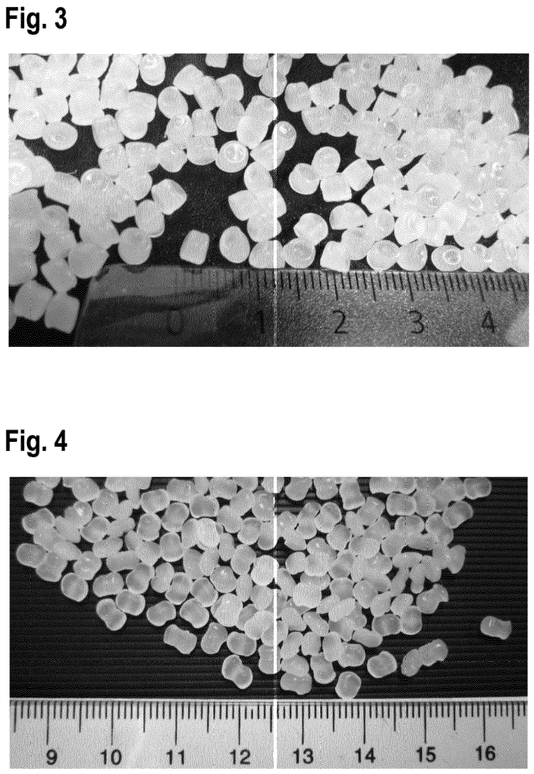

Adjusting the temperature of the melt fed to the extruder or granulator device to such temperatures allows to get a good cut with regularly shaped pellets; i.e. the pellets are cylindrical and not sheared to the side and the cylinders have equal lengths with only a very small diameter increase at the cylinder ends. Figure 3 shows a representative collection of pellets having a good cut. Feeding a melt of a too high temperature to the extruder or granulator device results in a deteriorated pellet cutting. The pellets may have a cylindrical shape but can be sheared to the side. The cylinders may not have equal lengths and may have a pronounced diameter increase at the cylinder ends, i.e. have a so-called "dog-bone" shape. Figure 4 shows a representative collection of pellets having such a poor cut performance. Feeding a melt of a too high temperature to the extruder or granulator device may also give a higher amount of pellet agglomerates and, caused by shape irregularities which may break off, a higher amount of product fines in the pellet system.

Operating one or more of the cooling jackets cooling the post reactor cooler with a coolant, of which the inlet temperature is independently controlled from the inlet temperature of the coolant or the coolants fed to the one or more cooling jackets cooling the polymerization reactor, allows to adjust the melt temperature at the extruder inlet independently from the conditions within the polymerization reactor and allows to compensate for the different cooling behaviors of LDPE grades of different MFR values. While for cooling the reaction mixture within the polymerization reactor, at a given temperature difference between the temperature of the reaction mixture and the coolant temperature, the temperature drop is higher in the production of LDPE grades having a relatively high MFR value than in the production of LDPE grades having a relatively low MFR value, the opposite behavior can be observed for the cooling in the post reactor cooler where a two-phase system is present. Due to a lower heat transfer rate, LDPE grades which have a relatively high MFR value need a more intense cooling in the post reactor cooler than LDPE grades which have a relatively low MFR value to get the same temperature reduction.

In preferred embodiments of the present disclosure, the heat removed from the polymerization system by the cooling jackets attached to the tubular polymerization reactor and attached to the post reactor cooler is used to generate steam. When using pressurized water as coolant, the steam can directly be generated from the coolant by boiling. It is however also possible to circulate the coolant for cooling the cooling jackets in a closed loop as a secondary system circle and transfer the removed heat of polymerization via heat exchangers to a primary coolant from which the steam is generated.

For achieving a high monomer conversion rate and generating a as high a possible amount of steam, the coolant inlet temperatures of the coolants cooling the cooling jackets of the tubular polymerization reactor and of the post reactor cooler are in the range from 50°C to 220°C, preferably from 80°C to 200°C, and more preferably from 100°C to 190°C.

The coolant inlet temperature of the coolant, of which the inlet temperature is independently controlled from the inlet temperature of the coolant or the coolants fed to the one or more cooling jackets cooling the polymerization reactor is preferably in the range from 80°C to 220°C and more preferably in the range from 100°C to 200°.

In preferred embodiments of the present disclosure, the coolants for cooling the cooling jackets of the polymerization reactor and cooling the cooling jackets of the post reactor cooler are operated in closed loops. Preferably, the coolants for cooling the cooling jackets of the tubular polymerization reactor and for cooling the cooling jackets of the post reactor cooler are circulated in a cooling system which comprises a volume buffer system to accommodate volume expansion of the coolant, a coolant circulation pump and a cooling arrangement for removing the absorbed heat of polymerization from the cooling system.

Preferably, the coolants for cooling the cooling jackets of the tubular polymerization reactor and for cooling the cooling jackets of the post reactor cooler are pressurized waters and each of the pressurized waters is circulated in a cooling system which comprises a volume buffer system to accommodate volume expansion of the water, a water circulation pump and a cooling arrangement for removing absorbed the heat of polymerization from the cooling system.

The cooling of the pressurized waters can occur by direct steam generation from the pressurized waters, preferably by releasing steam from a buffer vessel of the cooling system. The temperature control of the pressurized water is then preferably carried out by varying the pressure in the buffer vessel. Such a cooling method easily allows to generate steam.

In another embodiment, the cooling jackets of the tubular polymerization reactor and of the post reactor cooler are cooled by pressurized waters which are operated in closed loops as secondary system circles and the absorbed heat of polymerization is transferred via heat exchangers to primary coolants from which the steam is generated. Preferably, the coolants cooling the cooling jackets of the tubular polymerization reactor and of the post reactor cooler and the primary coolants are pressurized waters. In this cooling method, the secondary cooling systems for cooling the cooling jackets are preferably operated nitrogen pressurized to suppress boiling in the cooling systems for cooling the cooling jackets. Such cooling methods are very flexible in controlling the temperature of the pressurized waters conveyed to the cooling jackets.

In preferred embodiments of the present disclosure, the coolants for cooling the cooling jackets of the tubular polymerization reactor and for cooling the cooling jackets of the post reactor cooler are pressurized waters and the pressurized waters for cooling the cooling jackets of the tubular polymerization reactor are circulated in cooling systems comprising a buffer vessel and a water circulation pump and the inlet temperatures of the pressurized waters cooling the cooling jackets of the tubular polymerization reactor are controlled by varying the pressures in the buffer vessels.

In preferred embodiments of the present disclosure, the coolants for cooling the cooling jackets of the tubular polymerization reactor and for cooling the cooling jackets of the post reactor cooler are pressurized waters and the pressurized water, of which the inlet temperature is independently controlled from the inlet temperature of the pressurized water or the pressurized waters fed to the one or more cooling jackets cooling the polymerization reactor, is circulated in a cooling system which is cooled by a primary cooling system.

In a preferred embodiment of the present disclosure, the inlet temperature of at least one coolant fed to the one or more cooling jackets cooling the polymerization reactor is controlled in a manner to achieve a maximum ethylene conversion. With a constant feed rate of compressed reaction gas composition from the secondary compressor to the tubular reactor, a higher ethylene conversion corresponds to a higher amount of produced ethylene polymer and, consequently, to a higher feed rate of fresh ethylene. Thus, in practice, monitoring the ethylene conversion occurs by monitoring the fresh ethylene feed rate. For maximizing the ethylene conversion in the production of a specific LDPE grade, the inlet temperature of at least one coolant fed to the one or more cooling jackets cooling the polymerization reactor is accordingly varied in a controlled manner until the fresh ethylene feed rate has reached a maximum.

Preferably, the inlet temperature of the coolant, of which the inlet temperature is independently controlled from the inlet temperature of the coolant or the coolants fed to the one or more cooling jackets cooling the polymerization reactor, is controlled by providing the temperature of the melt fed to the extruder or granulator device as set point.

In order to maintain good water quality in the pressurized water systems, a small amount of water may be discontinuously released to sewer. The make-up water may come from condensate system within the LDPE plant. Water treatment chemicals may be added to maintain good water quality. The addition occurs preferably by a dosing pump.

In preferred embodiments of the present disclosure, during plant shut-down and start-up the coolant water system is heated up by injection of steam.

In preferred embodiments of the present disclosure, the coolants are monitored by a hydrocarbon detector to detect hydrocarbons leaking from the polymerization reactor or the post reactor cooler into the coolant systems.

### EXAMPLES

The melt flow rate MFR was determined according to DIN EN ISO 1133:2005, condition D at a temperature of 190°C under a load of 2.16 kg.

Density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

For preparing various LDPE grades, continuous polymerizations of ethylene were carried out in a high-pressure tubular reactor of the design shown in Figure 1 having in total a length of 2140 m with adding propionaldehyde as chain transfer agent to the fresh ethylene stream entering the primary compressor (1a). The secondary compressor (1b) was operated with a through-put of 125 t reaction gas composition per hour compressing the reaction gas composition to a pressure of 260 MPa at the inlet of the tubular reactor. For carrying out the polymerization, peroxidic polymerization initiators were metered into the tubular reactor at four positions using isododecane as additional diluent, thus resulting in four reaction zones within the tubular reactor.

Pressurized cooling water was circulated through cooling jackets attached to the outer surface of the reactor tubes (not shown in Figure 1) for removing the generated heat of polymerization. The cooling jackets of each of the reaction zones were divided in two groups. The cooling jackets installed at first segments of the four reaction zones, in which the polymerization of ethylene occurred, were provided with cooling water having a first reactor cooling water temperature T_{CR1} coming from a first cooling water system and the cooling jackets installed at the subsequent second segments of the four reaction zones, in which the reaction mixture obtained in the first segments was only cooled, were provided with cooling water having a second reactor cooling water temperature T_{CR2} coming from a second, independently controlled cooling water system.

The reaction mixture was discharged from the tubular reactor (4) through pressure control valve (6). The pressure downstream of the pressure control valve (6) was reduced to about 100 MPa, resulting in a temperature increase in the reaction mixture of up to 60°C and the formation of a two-phase system of gas and molten polymer. The reaction mixture was then passed through post reactor cooler (7) which was equipped with cooling jackets attached to the outer surface of the tubes of the post reactor cooler. The cooling jackets of post reactor cooler (7) were divided in two groups. The cooling jackets of the upstream group of cooling jackets, i.e. the cooling jackets installed close to the inlet of the post reactor cooler (7), were provided with cooling water coming from the first cooling water system, thus with cooling water having the first reactor cooling water temperature T_{CR1}. Consequently, the first cooler cooling water temperature T_{CC1} is identical with the first reactor cooling water temperature T_{CR1}. The cooling jackets of the downstream group of cooling jackets, i.e. the cooling jackets installed close to the outlet of the post reactor cooler (7), were provided with cooling water having a second cooler cooling water temperature T_{CC2} coming from a third, independently controlled cooling water system.

The reaction mixture leaving post reactor cooler (7) was separated from volatiles in two steps via a first separation vessel (8) and a second separation vessel (9). The gaseous components separated from the liquid fraction in the first separation vessel (8) were recycled to the secondary compressor (2) in a high-pressure circuit (11) and the gaseous components separated from the liquid fraction in the second separation vessel (9) were recycled to the primary compressor (1) in a low-pressure circuit (14). The degassed liquid polymer withdrawn from the second separation vessel (9) was conveyed to an extruder and granulator (10) to form LDPE pellets.

The employed granulator unit for forming the LDPE pellets was an underwater pelletizer with conveying the formed LPPE pellets to a centrifugal pellet dryer. Fines obtained during the pelletizing process remained in the pellet transport water and were separated from the pellet transport water by a sieving unit. Pellet agglomerates and oversized pellets were removed from the regular-sized LDPE pellets by sieving operations in the pellet dryer and in a subsequently located pellet classifier.

Steam having a pressure of 0.5 MPa abs was generated from both the cooling waters of the first cooling water system and of the second cooling water system. The amount of generated steam is reported in Table 1.

### Example 1

A LDPE grade having a MFR_{2.16} of 36 g/10 min and a density of 0.924 g/cm³ was produced. The amount of added propionaldehyde was 3.4 kg per ton of produced polyethylene and the compressed reaction gas composition was heated in pre-heater (3) to a temperature of 157°C.

The main process parameters of the ethylene polymerization as well as the obtained amounts of fines separated from the pellet transport water and of the waste pellets separated off in the pellet dryer and in the pellet classifier and the amount of generated 0.5 MPa abs steam are summarized in Table 1.

The pelletizing resulted in a good cut with regularly shaped pellets which were cylindrical and had a very small diameter increase at the cylinder ends.

### Comparative Example A

The polymerization of Example 1 for producing a LDPE grade having a MFR_{2.16} of 36 g/10 min and a density of 0.924 g/cm³ was repeated with adding 3.4 kg propionaldehyde per ton of produced polyethylene and heating the compressed reaction gas composition in pre-heater (3) to a temperature of 157°C, however the polymerization system was equipped with only two independently controlled cooling water systems. Thus, not only the cooling jackets of the upstream group of cooling jackets, i.e. the cooling jackets installed close to the inlet of the post reactor cooler (7), were provided with cooling water coming from the first cooling water system having the first reactor cooling water temperature T_{CR1} but also the cooling jackets of the downstream group of cooling jackets were provided with cooling water coming from the first cooling water system. Consequently, the first cooler cooling water temperature T_{CC1} and the second cooler cooling water temperature T_{CC2} are the same and identical with the first reactor cooling water temperature T_{CR1}.

The main process parameters of the ethylene polymerization as well as the obtained amounts of fines separated from the pellet transport water and of the waste pellets separated off in the pellet dryer and in the pellet classifier and the amount of generated 0.5 MPa abs steam are summarized in Table 1.

Due to the higher temperature of the cooling water cooling the cooling jackets of the downstream group of cooling jackets, the product melt arrived at the extruder inlet at much higher temperature resulting in a deteriorated pellet cutting performance with a higher amount of pellet agglomerates and product fines.

Compared to Example 1, the higher amount of fines obtained during the pelletizing process required a more frequent cleaning of the pellet water sieving unit and of the degassing silos.

### Comparative Example B

The polymerization of Comparative Example A for producing a LDPE grade having a MFR_{2.16} of 36 g/10 min and a density of 0.924 g/cm³ was repeated in the polymerization system of Comparative Example A with adding 3.4 kg propionaldehyde per ton of produced polyethylene and heating the compressed reaction gas composition in pre-heater (3) to a temperature of 157°C.

For improving the pelletizing behaviour, the peak temperature of the 4^{th} reaction zone was reduced to 285°C. The first cooler cooling water temperature T_{CC1} had to be maintained at 160°C in order to avoid severe reactor fouling. The pelletizing resulted in a good cut with regularly shaped pellets.

The reduced peak temperature of the 4^{th} reaction zone resulted in a significant reduction of the output of the polymerization reactor.

### Example 2 :

The polymerization of Example 1 was repeated, however the conditions were amended to produce a LDPE grade having a MFR_{2.16} of 0.3 g/10 min and a density of 0.923 g/cm³. The amount of added propionaldehyde was set to 0.8 kg per ton of produced polyethylene and the compressed reaction gas composition was heated in pre-heater (3) to a temperature of 165°C.

The main process parameters of the ethylene polymerization as well as the obtained amounts of fines separated from the pellet transport water and of the waste pellets separated off in the pellet dryer and in the pellet classifier and the amount of generated 0.5 MPa abs steam are summarized in Table 1.

The pelletizing of the LDPE grade occurred at stable conditions and resulted in a good cut with regularly shaped pellets.

At the end of the production run for preparing the LDPE grade having a MFR_{2.16} of 0.3 g/10 min, the reactor conditions were changed to produce a LDPE grade having a MFR_{2.16} of 0.8 g/10 min and a density of 0.923 g/cm³. After having reached the targeted MFR_{2.16} value in the LDPE melt in front of the die plate, it took one hour to reach an acceptable gel level in the produced LDPE due to a lagging discharge of some part of the previous LDPE from separation vessel (8) and separation vessel (9).

### Comparative Example C

The polymerization of Example 2 for producing a LDPE grade having a MFR_{2.16} of 0.3 g/10 min and a density of 0.923 g/cm³ was repeated with adding 0.8 kg propionaldehyde per ton of produced polyethylene and heating the compressed reaction gas composition in pre-heater (3) to a temperature of 165°C, however the polymerization system was equipped with only two independently controlled cooling water systems. Thus, all cooling jackets of the post reactor cooler (7) were provided with cooling water coming from the first cooling water system having the first reactor cooling water temperature T_{CR1}.

In the pelletizing of the LDPE, the through-put of the extruder (10) fluctuated, resulting in the production of LDPE pellets having different sizes.

At the end of the production run for preparing the LDPE grade having a MFR_{2.16} of 0.3 g/10 min, the reactor conditions were changed to produce a LDPE grade having a MFR_{2.16} of 0.8 g/10 min and a density of 0.923 g/cm³. After having reached the targeted MFR_{2.16} value in the LDPE melt in front of the die plate, it took three hours to reach an acceptable gel level in the produced LDPE.

### Comparative Example D

The polymerization of Comparative Example C for producing a LDPE grade having a MFR_{2.16} of 0.3 g/10 min and a density of 0.923 g/cm³ was repeated in the polymerization system of Comparative Example C with adding 0.8 kg propionaldehyde per ton of produced polyethylene and heating the compressed reaction gas composition in pre-heater (3) to a temperature of 165°C.

For achieved an improved pelletizing behavior and to increase the melt viscosity in the separator vessels, the first cooler cooling water temperature T_{CC1} for cooling the first segments of the reaction zones and cooling the post reactor cooler was increased to 190°C. The pelletizing of the LDPE grade occurred at stable conditions and resulted in a good cut with regularly shaped pellets.

At the end of the production run for preparing the LDPE grade having a MFR_{2.16} of 0.3 g/10 min, the reactor conditions were changed to produce a LDPE grade having a MFR_{2.16} of 0.8 g/10 min and a density of 0.923 g/cm³. After having reached the targeted MFR_{2.16} value in the LDPE melt in front of the die plate, it took one hour to reach an acceptable gel level in the produced LDPE.

**Table 1**

| | | Example 1 | Comp. Ex. A | Comp. Ex. B | Example 2 | Comp. Ex. C | Comp. Ex. D |
|---|---|---|---|---|---|---|---|
| MFR_{2.16} | [g/ 10 min] | 36 | 36 | 36 | 0.3 | 0.3 | 0.3 |
| Peak temperature in 1^{st} reaction zone | [°C] | 298 | 298 | 298 | 295 | 293 | 295 |
| Peak temperature in 2^{nd} reaction zone | [°C] | 305 | 305 | 305 | 298 | 298 | 298 |
| Peak temperature in 3^{rd} reaction zone | [°C] | 305 | 305 | 305 | 298 | 298 | 298 |
| Peak temperature in 4^{th} reaction zone | [°C] | 305 | 305 | 285 | 293 | 293 | 293 |
| First reactor cooling water temp. T_{CR1} | [°C] | 160 | 160 | 160 | 183 | 183 | 190 |
| Second reactor cooling water temp. T_{CR2} | [°C] | 145 | 145 | 145 | 170 | 170 | 175 |
| Melt temperature at reactor outlet | [°C] | 281 | 281 | 263 | 273 | 273 | 277 |
| First cooler cooling water temp. T_{CC1} | [°C] | 160 | 160 | 160 | 183 | 183 | 190 |
| Second cooler cooling water temp. T_{CC2} | [°C] | 120 | 160 | 160 | 200 | 183 | 190 |
| Melt temperature at extruder inlet | [°C] | 240 | 260 | 240 | 244 | 230 | 240 |
| Produced LDPE | [t/d] | 1110 | 1110 | 1037 | 900 | 900 | 860 |
| Generated steam (0.5 MPa) | [t/d] | 1387 | 1387 | 1295 | 1025 | 1025 | 980 |
| Waste Pellets | [kg/d] | 400 | 1500 | 400 | 350 | 450 | 380 |
| Separated fines | [kg/d] | 100 | 450 | 100 | 70 | 100 | 80 |

The Examples and Comparative Examples show that carrying out the polymerizations in a polymerization system having a post reactor cooler equipped with cooling jackets, which are cooled by cooling water having a temperature independently controlled form the temperature of the cooling water provided to the cooling jackets installed at the polymerization reactor, allows to prepare the LDPE grades with a high output and a high amount of generated steam without operational issues in the separation of the produced reaction mixture in polymeric and gaseous components and in the pelletizing of the LDPE.

Comparative Examples A and B show that when cooling the cooling jackets of the post reactor cooler in the production of a LPDE grade having a MFR_{2.16} of 36 g/10 min only with cooling water used also to cool the cooling jackets of the polymerization reactor, polymerizing at the reactor conditions of Example 1 allows to obtain a high LDPE output and a high amount of generated steam but the pellet cutting performance is poor; or it is possible to have a good pellet cutting performance, however at the cost of a reduced LDPE output and a lower amount of generated steam.

Comparative Examples C and D show that when cooling the cooling jackets of the post reactor cooler in the production of a LPDE grade having a MFR_{2.16} of 0.3 g/10 min only with cooling water used also to cool the cooling jackets of the polymerization reactor, polymerizing at the reactor conditions of Example 2 allows to obtain a high LDPE output and a high amount of generated steam but pellets of different sizes are obtained and the transition time to LDPE grades of a higher MFR is prolonged; or it is possible to have pellets of a uniform size and a short transition time, however at the cost of a reduced LDPE output and a lower amount of generated steam.

## Claims

1. A process for preparing ethylene polymers comprising polymerizing ethylene or copolymerizing ethylene and one or more comonomers at a temperature from 180°C to 350°C and a pressure of from 110 MPa to 350 MPa in a continuously operated tubular polymerization reactor being equipped with one or more cooling jackets for removing the heat of the reaction, wherein a reaction mixture leaves the reactor through a pressure control valve and then passes a post reactor cooler equipped with one or more cooling jackets, and
wherein the cooling jackets are provided with at least two coolants having an inlet temperature and the inlet temperature of a coolant fed to one or more of the cooling jackets cooling the post reactor cooler is independently controlled from the inlet temperature of the coolant or the coolants fed to the one or more cooling jackets cooling the polymerization reactor.

2. The process of claim 1, wherein the post reactor cooler is equipped with at least one upstream cooling jacket and at least one downstream cooling jacket and the cooling jackets cooling the post reactor cooler are provided with at least two coolants having independently controlled inlet temperatures.

3. The process of claim 2, wherein the coolant, of which the inlet temperature is independently controlled from the inlet temperature of the coolant or the coolants fed to the one or more cooling jackets cooling the polymerization reactor, is the coolant fed to the at least one downstream cooling jacket.

4. The process of any of claims 1 to 3, wherein the tubular polymerization reactor has one, two or more reaction zones and each of the reaction zones comprises at least an upstream segment, in which a polymerization of ethylene or a copolymerization of ethylene and the one or more comonomers occurs, and a downstream segment, in which the reaction mixture is cooled, and each of the segments of the reaction zones is equipped with one or more cooling jackets,
wherein the inlet temperature of a coolant fed to one or more of the cooling jackets cooling a downstream segment of the reaction zones is independently controlled from the inlet temperature of coolant fed to one or more of the cooling jackets cooling an upstream segment of the reaction zones.

5. The process of any of claims 1 to 4, wherein the coolant inlet temperatures of the coolants cooling the cooling jackets of the tubular polymerization reactor and of the post reactor cooler are in the range from 50°C to 220°C.

6. The process of any of claims 1 to 5, wherein the coolant inlet temperature of the coolant, of which the inlet temperature is independently controlled from the inlet temperature of the coolant or the coolants fed to the one or more cooling jackets cooling the polymerization reactor is in the range from 80°C to 220°C.

7. The process of any of claims 1 to 6, wherein the inlet temperature of at least one coolant fed to the one or more cooling jackets cooling the polymerization reactor is controlled in a manner to achieve a maximum ethylene conversion.

8. The process of any of claims 1 to 7, wherein the inlet temperature of the coolant, of which the inlet temperature is independently controlled from the inlet temperature of the coolant or the coolants fed to the one or more cooling jackets cooling the polymerization reactor, is controlled by providing the temperature of the melt fed to the extruder or granulator device as set point.

9. The process of any of claims 1 to 8, wherein the coolants for cooling the cooling jackets of the polymerization reactor and cooling the cooling jackets of the post reactor cooler are operated in closed loops.

10. The process of claim 9, wherein the coolants for cooling the cooling jackets of the tubular polymerization reactor and for cooling the cooling jackets of the post reactor cooler are circulated in a cooling system which comprises a volume buffer system to accommodate volume expansion of the coolant, a coolant circulation pump and a cooling arrangement for removing the absorbed heat of polymerization from the cooling system.

11. The process of any of claims 1 to 10, wherein the coolants for cooling the cooling jackets of the polymerization reactor and cooling the cooling jackets of the post reactor cooler are pressurized waters.

12. The process of claim 11, wherein the pressurized waters for cooling the cooling jackets of the tubular polymerization reactor are circulated in cooling systems comprising a buffer vessel and a water circulation pump, and the inlet temperatures of the pressurized waters cooling the cooling jackets of the tubular polymerization reactor are controlled by varying the pressures in the buffer vessels of the cooling systems.

13. The process of claim 11 or 12, wherein the pressurized water, of which the inlet temperature is independently controlled from the inlet temperature of the pressurized water or the pressurized waters fed to the one or more cooling jackets cooling the polymerization reactor, is circulated in a secondary cooling system which is cooled by a primary cooling system.

14. The process of any of claims 1 to 13, wherein the temperature of the melt fed to the extruder or granulator device is from 220°C to 270°C.

15. The process of any of claims 1 to 14, wherein the ethylene polymers are low density polyethylenes having a melt flow rate MFR determined according to DIN EN ISO 1133:2005, condition D at a temperature of 190°C under a load of 2.16 kg of from 0.05 g/10 min to 500 g/10 min.

## Patentansprüche

1. Verfahren zur Herstellung von Ethylenpolymeren, umfassend das Polymerisieren von Ethylen oder das Copolymerisieren von Ethylen und einem oder mehreren Comonomeren bei einer Temperatur von 180 °C bis 350 °C und einem Druck von 110 MPa bis 350 MPa in einem kontinuierlich betriebenen rohrförmigen Polymerisationsreaktor, der mit einem oder mehreren Kühlmänteln zum Abführen der Reaktionswärme ausgestattet ist, wobei das Reaktionsgemisch den Reaktor durch ein Druckregelventil verlässt und anschließend einen mit einem oder mehreren Kühlmänteln ausgestatteten Nachkühler durchläuft, und
wobei die Kühlmäntel mit mindestens zwei Kühlmitteln mit einer Einlasstemperatur versehen sind und die Einlasstemperatur eines Kühlmittels, das einem oder mehreren der Kühlmäntel zugeführt wird, die den Nachreaktorkühler kühlen, unabhängig von der Einlasstemperatur des Kühlmittels oder der Kühlmittel gesteuert wird, die dem einen oder den mehreren Kühlmänteln zugeführt werden, die den Polymerisationsreaktor kühlen.

2. Verfahren nach Anspruch 1, wobei der Nachreaktorkühler mit mindestens einem stromaufwärtigen Kühlmantel und mindestens einem stromabwärtigen Kühlmantel ausgestattet ist und die den Nachreaktorkühler kühlenden Kühlmäntel mit mindestens zwei Kühlmitteln mit unabhängig voneinander geregelten Einlasstemperaturen versehen sind.

3. Verfahren nach Anspruch 2, wobei das Kühlmittel, dessen Einlasstemperatur unabhängig von der Einlasstemperatur des Kühlmittels oder der Kühlmittel geregelt wird, die dem einen oder den mehreren Kühlmänteln zugeführt werden, die den Polymerisationsreaktor kühlen, das Kühlmittel ist, das dem mindestens einen stromabwärts gelegenen Kühlmantel zugeführt wird.

4. Verfahren nach einem der Ansprüche 1 bis 3, wobei der röhrenförmige Polymerisationsreaktor eine, zwei oder mehr Reaktionszonen aufweist und jede der Reaktionszonen mindestens ein stromaufwärtiges Segment, in dem eine Polymerisation von Ethylen oder eine Copolymerisation von Ethylen und dem einen oder den mehreren Comonomeren stattfindet, und ein stromabwärtiges Segment, in dem das Reaktionsgemisch gekühlt wird, umfasst, und jedes der Segmente der Reaktionszonen mit einem oder mehreren Kühlmänteln ausgestattet ist, wobei die Einlasstemperatur eines Kühlmittels, das einem oder mehreren der Kühlmäntel zugeführt wird, die ein stromabwärts gelegenes Segment der Reaktionszonen kühlen, unabhängig von der Einlasstemperatur des Kühlmittels geregelt wird, das einem oder mehreren der Kühlmäntel zugeführt wird, die ein stromaufwärts gelegenes Segment kühlen der Reaktionszonen.

5. Verfahren nach einem der Ansprüche 1 bis 4, wobei die Kühlmitteleintrittstemperaturen der Kühlmittel, die die Kühlmäntel des röhrenförmigen Polymerisationsreaktors und des Nachreaktorkühlers kühlen, im Bereich von 50 °C bis 220 °C liegen.

6. Verfahren nach einem der Ansprüche 1 bis 5, wobei die Kühlmitteleintrittstemperatur des Kühlmittels, dessen Eintrittstemperatur unabhängig von der Eintrittstemperatur des Kühlmittels oder der Kühlmittel geregelt wird, die dem einen oder den mehreren Kühlmänteln zugeführt werden, die den Polymerisationsreaktor kühlen, im Bereich von 80 °C bis 220 °C liegt.

7. Verfahren nach einem der Ansprüche 1 bis 6, wobei die Einlasstemperatur mindestens eines Kühlmittels, das dem einen oder den mehreren Kühlmänteln zugeführt wird, die den Polymerisationsreaktor kühlen, so geregelt wird, dass eine maximale Ethylenumwandlung erreicht wird.

8. Verfahren nach einem der Ansprüche 1 bis 7, wobei die Einlasstemperatur des Kühlmittels, deren Einlasstemperatur unabhängig von der Einlasstemperatur des Kühlmittels oder der Kühlmittel geregelt wird, die dem einen oder den mehreren Kühlmänteln zugeführt werden, die den Polymerisationsreaktor kühlen, dadurch geregelt wird, dass die Temperatur der dem Extruder oder der Granuliervorrichtung zugeführten Schmelze als Sollwert vorgegeben wird.

9. Verfahren nach einem der Ansprüche 1 bis 8, wobei die Kühlmittel zum Kühlen der Kühlmäntel des Polymerisationsreaktors und zum Kühlen der Kühlmäntel des Nachreaktorkühlers in geschlossenen Kreisläufen betrieben werden.

10. Verfahren nach Anspruch 9, wobei die Kühlmittel zum Kühlen der Kühlmäntel des röhrenförmigen Polymerisationsreaktors und zum Kühlen der Kühlmäntel des Nachreaktorkühlers in einem Kühlsystem zirkulieren, das ein Volumenpuffersystem zum Ausgleich der Volumenausdehnung des Kühlmittels, eine Kühlmittelzirkulationspumpe und eine Kühlanordnung zum Abführen der absorbierten Polymerisationswärme aus dem Kühlsystem umfasst.

11. Verfahren nach einem der Ansprüche 1 bis 10, wobei die Kühlmittel zum Kühlen der Kühlmäntel des Polymerisationsreaktors und zum Kühlen der Kühlmäntel des Nachreaktorkühlers unter Druck stehendes Wasser sind.

12. Verfahren nach Anspruch 11, wobei das unter Druck stehende Wasser zum Kühlen der Kühlmäntel des röhrenförmigen Polymerisationsreaktors in Kühlsystemen zirkuliert, die einen Pufferbehälter und eine Wasserzirkulationspumpe umfassen, und die Einlasstemperaturen des unter Druck stehenden Wassers, das die Kühlmäntel des röhrenförmigen Polymerisationsreaktors kühlt, durch Variieren der Drücke in den Pufferbehältern der Kühlsysteme geregelt werden.

13. Das Verfahren nach Anspruch 11 oder 12, wobei das unter Druck stehende Wasser, dessen Einlasstemperatur unabhängig von der Einlasstemperatur des unter Druck stehenden Wassers oder der unter Druck stehenden Wässer geregelt wird, die dem einen oder den mehreren Kühlmänteln zugeführt werden, die den Polymerisationsreaktor kühlen, in einem sekundären Kühlsystem zirkuliert wird, das durch ein primäres Kühlsystem gekühlt wird.

14. Verfahren nach einem der Ansprüche 1 bis 13, wobei die Temperatur der dem Extruder oder der Granuliervorrichtung zugeführten Schmelze zwischen 220 °C und 270 °C liegt.

15. Verfahren nach einem der Ansprüche 1 bis 14, wobei die Ethylenpolymere Polyolefine niedriger Dichte sind, mit einer Schmelzflussrate MFR gemäß DIN EN ISO 1133:2005, Bedingung D, bei einer Temperatur von 190 °C unter einer Belastung von 2,16 kg von 0,05 g/10 min bis 500 g/10 min.

## Revendications

1. Procédé de préparation de polymères d'éthylène comprenant la polymérisation d'éthylène ou la copolymérisation d'éthylène et d'un ou plusieurs comonomères à une température comprise entre 180 °C et 350 °C et à une pression comprise entre 110 MPa et 350 MPa dans un réacteur de polymérisation tubulaire à fonctionnement continu équipé d'une ou plusieurs chemises de refroidissement pour éliminer la chaleur de la réaction, dans lequel un mélange réactionnel quitte le réacteur par une vanne de régulation de pression, puis passe dans un refroidisseur post-réacteur équipé d'une ou plusieurs chemises de refroidissement, et
dans lequel les chemises de refroidissement sont pourvues d'au moins deux fluides de refroidissement ayant une température d'entrée, et la température d'entrée d'un fluide de refroidissement alimentant une ou plusieurs des chemises de refroidissement refroidissant le refroidisseur post-réacteur est contrôlée indépendamment de la température d'entrée du ou des fluides de refroidissement alimentant la ou les chemises de refroidissement refroidissant le réacteur de polymérisation.

2. Procédé selon la revendication 1, dans lequel le refroidisseur post-réacteur est équipé d'au moins une chemise de refroidissement en amont et d'au moins une chemise de refroidissement en aval, et les chemises de refroidissement refroidissant le refroidisseur post-réacteur sont pourvues d'au moins deux fluides de refroidissement dont les températures d'entrée sont contrôlées indépendamment.

3. Procédé selon la revendication 2, dans lequel le fluide de refroidissement dont la température d'entrée est contrôlée indépendamment de la température d'entrée du ou des fluides de refroidissement alimentant la ou les chemises de refroidissement refroidissant le réacteur de polymérisation est le fluide de refroidissement alimentant la au moins une chemise de refroidissement en aval.

4. Procédé selon l'une quelconque des revendications 1 à 3, dans lequel le réacteur de polymérisation tubulaire comporte une, deux ou plusieurs zones de réaction et chacune des zones de réaction comprend au moins un segment amont, dans lequel se produit une polymérisation d'éthylène ou une copolymérisation d'éthylène et d'un ou plusieurs comonomères, et un segment aval, dans lequel le mélange réactionnel est refroidi, et chacun des segments des zones de réaction est équipé d'une ou plusieurs chemises de refroidissement, dans lequel la température d'entrée d'un fluide de refroidissement alimentant une ou plusieurs des chemises de refroidissement refroidissant un segment en aval des zones de réaction est contrôlée indépendamment de la température d'entrée du fluide de refroidissement alimentant une ou plusieurs des chemises de refroidissement refroidissant un segment en amont des zones de réaction.

5. Procédé selon l'une quelconque des revendications 1 à 4, dans lequel les températures d'entrée des fluides de refroidissement les chemises de refroidissement du réacteur de polymérisation tubulaire et du refroidisseur post-réacteur sont comprises entre 50 °C et 220 °C.

6. Procédé selon l'une quelconque des revendications 1 à 5, dans lequel la température d'entrée du fluide de refroidissement, dont la température d'entrée est contrôlée indépendamment de la température d'entrée du ou des fluides de refroidissement alimentant la ou les chemises de refroidissement refroidissant le réacteur de polymérisation, est comprise entre 80 °C et 220 °C.

7. Procédé selon l'une quelconque des revendications 1 à 6, dans lequel la température d'entrée d'au moins un fluide de refroidissement alimentant la ou les chemises de refroidissement refroidissant le réacteur de polymérisation est contrôlée de manière à obtenir une conversion maximale de l'éthylène.

8. Procédé selon l'une quelconque des revendications 1 à 7, dans lequel la température d'entrée du fluide de refroidissement, dont la température d'entrée est contrôlée indépendamment de la température d'entrée du ou des fluides de refroidissement alimentant la ou les chemises de refroidissement refroidissant le réacteur de polymérisation, est contrôlée en fournissant la température de la masse fondue alimentant l'extrudeuse ou le dispositif de granulation comme point de consigne.

9. Procédé selon l'une quelconque des revendications 1 à 8, dans lequel les fluides de refroidissement destinés à refroidir les chemises de refroidissement du réacteur de polymérisation et à refroidir les chemises de refroidissement du refroidisseur post-réacteur fonctionnent en boucles fermées.

10. Procédé selon la revendication 9, dans lequel les fluides de refroidissement destinés à refroidir les chemises de refroidissement du réacteur de polymérisation tubulaire et à refroidir les chemises de refroidissement du refroidisseur post-réacteur circulent dans un système de refroidissement qui comprend un système tampon de volume pour compenser la dilatation volumique du fluide de refroidissement, une pompe de circulation du fluide de refroidissement et un dispositif de refroidissement pour évacuer la chaleur absorbée par la polymérisation hors du système de refroidissement.

11. Procédé selon l'une quelconque des revendications 1 à 10, dans lequel les fluides de refroidissement destinés à refroidir les chemises de refroidissement du réacteur de polymérisation et à refroidir les chemises de refroidissement du refroidisseur post-réacteur sont des eaux sous pression.

12. Procédé selon la revendication 11, dans lequel les eaux sous pression destinées à refroidir les chemises de refroidissement du réacteur de polymérisation tubulaire sont mises en circulation dans des systèmes de refroidissement comprenant un réservoir tampon et une pompe de circulation d'eau, et les températures d'entrée des eaux sous pression refroidissant les chemises de refroidissement du réacteur de polymérisation tubulaire sont contrôlées en faisant varier les pressions dans les réservoirs tampons des systèmes de refroidissement.

13. Procédé selon la revendication 11 ou 12, dans lequel l'eau sous pression, dont la température d'entrée est contrôlée indépendamment de la température d'entrée de l'eau sous pression ou des eaux sous pression alimentant une ou plusieurs chemises de refroidissement refroidissant le réacteur de polymérisation, est mise en circulation dans un système de refroidissement secondaire qui est refroidi par un système de refroidissement primaire.

14. Procédé selon l'une quelconque des revendications 1 à 13, dans lequel la température de la matière fondue alimentant l'extrudeuse ou le dispositif de granulation est comprise entre 220 °C et 270 °C.

15. Procédé selon l'une quelconque des revendications 1 à 14, dans lequel les polymères d'éthylène sont des polyéthylènes à basse densité éthylènes ayant un indice de fluidité à chaud MFR déterminé selon la norme DIN EN ISO 1133:2005, condition D, à une température de 190 °C sous une charge de 2,16 kg, compris entre 0,05 g/10 min et 500 g/10 min.
